# EUROPEAN PATENT APPLICATION

(11) **EP 2 647 287 A1**
(43) Date of publication of application: **09.10.2013**
(21) Application number: 13173978.1
(22) Date of filing: 31.07.2009
(51) Int. Cl.: A01N 47/24, A01N 43/54, A01P 3/00

(54) **Use of 5-fluorocytosine and its derivatives as fungicides**

(30) Priority: 01.08.2008 US 137736 P
(62) Divisional of application: 09807658.1
(71) Applicant: Dow AgroSciences LLC, Indianapolis, IN 46268-1054 (US)
(72) Inventor: Benko, Zoltan, Indianapolis, IN 46240 (US); Bryan, Kristy, Carmel, IN 46033 (US); Davis, George, Carmel, IN 46032 (US); Epp, Jeffrey, Noblesville, IN 46062 (US); Lorsbach, Beth, Indianapolis, IN 46220 (US); Meyer, Kevin, Zionsville, IN Indiana 46077 (US); Owen, W., Carmel, IN 46033 (US); Sullenberger, Michael, Westfield, IN 46074 (US); Webster, Jeffery, New Palestine, IN 46163 (US); Young, David, Carmel, IN 46033 (US); Yao, Chenglin, Westfield, IN 46074 (US)
(74) Representative: Heubeck, Christian

(57) **Abstract**

The present disclosure is related to the field agrochemicals including 5-fluorocytosine and its derivatives and their use as fungicides.

## Description

### Cross Reference to Related Applications

This application claims the benefit of U.S. Provisional Patent Application Serial No. 61/137,736 filed August 1, 2008.

### Field of the Invention

This present disclosure is related to the field of 5-fluorocytosine and its derivatives and to the use of these compounds as fungicides.

### Background and Summary of the Invention

Fungicides are compounds, of natural or synthetic origin, which act to protect and cure plants against damage caused by agriculturally relevant fungi. Generally, no single fungicide is useful in all situations. Consequently, research is ongoing to produce fungicides that may have better performance, are easier to use, and cost less.

The present disclosure relates to 5-fluorocytosine and its derivatives and their use as fungicides. 5-Fluorocytosine and its derivatives may offer protection against ascomycetes, basidiomycetes, deuteromycetes and oomycetes.

One embodiment of the present disclosure includes a method of controlling a pathogen induced disease in a plant that is at risk of being diseased from the pathogen comprising contacting one of the plant and an area adjacent to the plant with a composition including one of 5-fluorocytosine and a 5-fluorocytosine derivative.

Another embodiment of the present disclosure is a use of a compound including one of 5-fluorocytosine and a 5-fluorocytosine derivative, for protection of a plant against attack by a phytopathogenic organism or the treatment of a plant infested by a phytopathogenic organism, comprising the application of one of 5-fluorocytosine and a 5-fluorocytosine derivative, or a composition including one of 5-fluorocytosine and a 5-fluorocytosine derivative to soil, a plant, a part of a plant, foliage, and/or seeds.

Additionally, another embodiment of the present disclosure is a composition useful for protecting a plant against attack by a phytopathogenic organism and/or treatment of a plant infested by a phytopathogenic organism comprising a compound including one of 5-fluorocytosine and a 5-fluorocytosine derivative and a phytologically acceptable carrier material.

### Detailed Description of the Present Disclosure

The compounds of the present disclosure may be purchased commercially or prepared from known methods in the literature, such as Duschinsky, R. et al. J. Med. Chem. 1966, 9, 566-572; Duschinsky, R. and Hoffer, M. U.S. Patent 3,309,359, 1967; Li, J. et al. WO 2005/080351 A1, 2005; and Bautista Rodriguez, J. et al. WO 2009/071726 A1, 2009. Each of the aforementioned disclosures is expressly incorporated by reference herein.

The compounds of the present disclosure may be applied by any of a variety of known techniques, either as the compounds or as formulations comprising the compounds. For example, the compounds may be applied to the roots, seeds or foliage of plants for the control of various fungi, without damaging the commercial value of the plants. The materials may be applied in the form of any of the generally used formulation types, for example, as solutions, dusts, wettable powders, flowable concentrates, or emulsifiable concentrates.

Preferably, the compounds of the present disclosure are applied in the form of a formulation, including at least one of 5-fluorocytosine and a 5-fluorocytosine derivative with a phytologically acceptable carrier. Concentrated formulations may be dispersed in water, or other liquids, for application, or formulations may be dust-like or granular, which may then be applied without further treatment. The formulations can be prepared according to procedures that are conventional in the agricultural chemical art.

The present disclosure contemplates all vehicles by which one or more of the compounds may be formulated for delivery and use as a fungicide. Typically, formulations are applied as aqueous suspensions or emulsions. Such suspensions or emulsions may be produced from watersoluble, water suspendable, or emulsifiable formulations which are solids, usually known as wettable powders; or liquids, usually known as emulsifiable concentrates, aqueous suspensions, or suspension concentrates. As will be readily appreciated, any material to which these compounds may be added may be used, provided it yields the desired utility without significant interference with the activity of these compounds as antifungal agents.

Wettable powders, which may be compacted to form water dispersible granules, comprise an intimate mixture including one of 5-fluorocytosine and a 5-fluorocytosine derivative, an inert carrier and surfactants. The concentration of the compound in the wettable powder may be from about 10 percent to about 90 percent by weight based on the total weight of the wettable powder, more preferably about 25 weight percent to about 75 weight percent. In the preparation of wettable powder formulations, the compounds may be compounded with any finely divided solid, such as prophyllite, talc, chalk, gypsum, Fuller's earth, bentonite, attapulgite, starch, casein, gluten, montmorillonite clays, diatomaceous earths, purified silicates or the like. In such operations, the finely divided carrier and surfactants are typically blended with the compound(s) and milled.

Emulsifiable concentrates of 5-fluorocytosine and a 5-fluorocytosine derivative may comprise a convenient concentration, such as from about 10 weight percent to about 50 weight percent of the compound, in a suitable liquid, based on the total weight of the concentrate. The compounds may be dissolved in an inert carrier, which is either a water-miscible solvent or a mixture of water-immiscible organic solvents, and emulsifiers. The concentrates may be diluted with water and oil to form spray mixtures in the form of oil-in-water emulsions. Useful organic solvents include aromatics, especially the high-boiling naphthalenic and olefinic portions of petroleum such as heavy aromatic naphtha. Other organic solvents may also be used, for example, terpenic solvents, including rosin derivatives, aliphatic ketones, such as cyclohexanone, and complex alcohols, such as 2-ethoxyethanol.

Emulsifiers which may be advantageously employed herein may be readily determined by those skilled in the art and include various nonionic, anionic, cationic and amphoteric emulsifiers, or a blend of two or more emulsifiers. Examples of nonionic emulsifiers useful in preparing the emulsifiable concentrates include the polyalkylene glycol ethers and condensation products of alkyl and aryl phenols, aliphatic alcohols, aliphatic amines or fatty acids with ethylene oxide, propylene oxides such as the ethoxylated alkyl phenols and carboxylic esters solubilized with the polyol or polyoxyalkylene. Cationic emulsifiers include quaternary ammonium compounds and fatty amine salts. Anionic emulsifiers include the oil-soluble salts (e.g., calcium) of alkylaryl sulphonic acids, oil-soluble salts or sulfated polyglycol ethers and appropriate salts of phosphated polyglycol ether.

Representative organic liquids which may be employed in preparing the emulsifiable concentrates of the compounds of the present invention are the aromatic liquids such as xylene, propyl benzene fractions; or mixed naphthalene fractions, mineral oils, substituted aromatic organic liquids such as dioctyl phthalate; kerosene; dialkyl amides of various fatty acids, particularly the dimethyl amides of fatty glycols and glycol derivatives such as the n-butyl ether, ethyl ether or methyl ether of diethylene glycol, and the methyl ether of triethylene glycol and the like. Mixtures of two or more organic liquids may also be employed in the preparation of the emulsifiable concentrate. Organic liquids include xylene, and propyl benzene fractions, with xylene being most preferred in some cases. Surface-active dispersing agents are typically employed in liquid formulations and in an amount of from 0.1 to 20 percent by weight based on the combined weight of the dispersing agent with one or more of the compounds. The formulations can also contain other compatible additives, for example, plant growth regulators and other biologically active compounds used in agriculture.

Aqueous suspensions including water-insoluble 5-fluorocytosine or a 5-fluorocytosine derivative may be dispersed in an aqueous vehicle at a concentration in the range from about 5 to about 50 weight percent, based on the total weight of the aqueous suspension. Suspensions are prepared by finely grinding one or more of the compounds, and vigorously mixing the ground material into a vehicle comprised of water and surfactants chosen from the same types discussed above. Other components, such as inorganic salts and synthetic or natural gums, may also be added to increase the density and viscosity of the aqueous vehicle.

5-Fluorocytosine or a 5-fluorocytosine derivative may also be applied as granular formulations, which are particularly useful for applications to the soil. Granular formulations generally contain from about 0.5 to about 10 weight percent, based on the total weight of the granular formulation of the compound(s), dispersed in an inert carrier which consists entirely or in large part of coarsely divided inert material such as attapulgite, bentonite, diatomite, clay or a similar inexpensive substance. Such formulations are usually prepared by dissolving the compounds in a suitable solvent and applying it to a granular carrier which has been preformed to the appropriate particle size, in the range of from about 0.5 to about 3 mm. A suitable solvent is a solvent in which the compound is substantially or completely soluble. Such formulations may also be prepared by making a dough or paste of the carrier and the compound and solvent, and crushing and drying to obtain the desired granular particle.

Dusts containing 5-fluorocytosine or a 5-fluorocytosine derivative may be prepared by intimately mixing one or more of the compounds in powdered form with a suitable dusty agricultural carrier, such as, for example, kaolin clay, ground volcanic rock, and the like. Dusts can suitably contain from about 1 to about 10 weight percent of the compounds, based on the total weight of the dust.

The formulations may additionally contain adjuvant surfactants to enhance deposition, wetting and penetration of the compounds onto the target crop and organism. These adjuvant surfactants may optionally be employed as a component of the formulation or as a tank mix. The amount of adjuvant surfactant will typically vary from 0.01 to 1.0 percent by volume, based on a spray-volume of water, preferably 0.05 to 0.5 volume percent. Suitable adjuvant surfactants include, but are not limited to ethoxylated nonyl phenols, ethoxylated synthetic or natural alcohols, salts of the esters or sulphosuccinic acids, ethoxylated organosilicones, ethoxylated fatty amines and blends of surfactants with mineral or vegetable oils. The formulations may also include oil-in-water emulsions such as those disclosed in U.S. Patent Application Serial No. 11/495,228, the disclosure of which is expressly incorporated by reference herein.

The formulations may optionally include combinations that contain other pesticidal compounds. Such additional pesticidal compounds may be fungicides, insecticides, herbicides, nematocides, miticides, arthropodicides, bactericides or combinations thereof that are compatible with the compounds of the present invention in the medium selected for application, and not antagonistic to the activity of the present compounds. Accordingly, in such embodiments, the other pesticidal compound is employed as a supplemental toxicant for the same or for a different pesticidal use. 5-Fluorocytosine or a 5-fluorocytosine derivative and the pesticidal compound in the combination can generally be present in a weight ratio of from 1:100 to 100:1.

The compounds of the present disclosure may also be combined with other fungicides to form fungicidal mixtures and synergistic mixtures thereof. The fungicidal compounds of the present disclosure are often applied in conjunction with one or more other fungicides to control a wider variety of undesirable diseases. When used in conjunction with other fungicide(s), the presently claimed compounds may be formulated with the other fungicide(s), tank mixed with the other fungicide(s) or applied sequentially with the other fungicide(s). Such other fungicides may include 2-(thiocyanatomethylthio)-benzothiazole, 2-phenylphenol, 8-hydroxyquinoline sulfate, ametoctradin, amisulbrom, antimycin, *Ampelomyces quisqualis,* azaconazole, azoxystrobin, *Bacillus subtilis,* benalaxyl, benomyl, benthiavalicarb-isopropyl, benzylaminobenzene-sulfonate (BABS) salt, bicarbonates, biphenyl, bismerthiazol, bitertanol, bixafen, blasticidin-S, borax, Bordeaux mixture, boscalid, bromuconazole, bupirimate, calcium polysulfide, captafol, captan, carbendazim, carboxin, carpropamid, carvone, chloroneb, chlorothalonil, chlozolinate, *Coniothyrium minitans,* copper hydroxide, copper octanoate, copper oxychloride, copper sulfate, copper sulfate (tribasic), cuprous oxide, cyazofamid, cyflufenamid, cymoxanil, cyproconazole, cyprodinil, dazomet, debacarb, diammonium ethylenebis-(dithiocarbamate), dichlofluanid, dichlorophen, diclocymet, diclomezine, dichloran, diethofencarb, difenoconazole, difenzoquat ion, diflumetorim, dimethomorph, dimoxystrobin, diniconazole, diniconazole-M, dinobuton, dinocap, diphenylamine, dithianon, dodemorph, dodemorph acetate, dodine, dodine free base, edifenphos, enestrobin, epoxiconazole, ethaboxam, ethoxyquin, etridiazole, famoxadone, fenamidone, fenarimol, fenbuconazole, fenfuram, fenhexamid, fenoxanil, fenpiclonil, fenpropidin, fenpropimorph, fentin, fentin acetate, fentin hydroxide, ferbam, ferimzone, fluazinam, fludioxonil, flumorph, fluopicolide, fluopyram, fluoroimide, fluoxastrobin, fluquinconazole, flusilazole, flusulfamide, flutianil, flutolanil, flutriafol, folpet, formaldehyde, fosetyl, fosetyl-aluminium, fuberidazole, furalaxyl, furametpyr, guazatine, guazatine acetates, GY-81, hexachlorobenzene, hexaconazole, hymexazol, imazalil, imazalil sulfate, imibenconazole, iminoctadine, iminoctadine triacetate, iminoctadine tris(albesilate), ipconazole, iprobenfos, iprodione, iprovalicarb, isoprothiolane, isopyrazam, isotianil, kasugamycin, kasugamycin hydrochloride hydrate, kresoxim-methyl, mancopper, mancozeb, mandipropamid, maneb, mepanipyrim, mepronil, mercuric chloride, mercuric oxide, mercurous chloride, metalaxyl, mefenoxam, metalaxyl-M, metam, metam-ammonium, metam-potassium, metam-sodium, metconazole, methasulfocarb, methyl iodide, methyl isothiocyanate, metiram, metominostrobin, metrafenone, mildiomycin, myclobutanil, nabam, nitrothal-isopropyl, nuarimol, octhilinone, ofurace, oleic acid (fatty acids), orysastrobin, oxadixyl, oxine-copper, oxpoconazole fumarate, oxycarboxin, pefurazoate, penconazole, pencycuron, penflufen, pentachlorophenol, pentachlorophenyl laurate, penthiopyrad, phenylmercury acetate, phosphonic acid, phthalide, picoxystrobin, polyoxin B, polyoxins, polyoxorim, potassium bicarbonate, potassium hydroxyquinoline sulfate, probenazole, prochloraz, procymidone, propamocarb, propamocarb hydrochloride, propiconazole, propineb, proquinazid, prothioconazole, pyraclostrobin, pyrametostrobin, pyraoxystrobin, pyrazophos, pyribencarb, pyributicarb, pyrifenox, pyrimethanil, pyroquilon, quinoclamine, quinoxyfen, quintozene, *Reynoutria sachalinensis* extract, sedaxane, silthiofam, simeconazole, sodium 2-phenylphenoxide, sodium bicarbonate, sodium pentachlorophenoxide, spiroxamine, sulfur, SYP-Z071, SYP-Z048, tar oils, tebuconazole, tebufloquin, tecnazene, tetraconazole, thiabendazole, thifluzamide, thiophanate-methyl, thiram, tiadinil, tolclofos-methyl, tolylfluanid, triadimefon, triadimenol, triazoxide, tricyclazole, tridemorph, trifloxystrobin, triflumizole, triforine, triticonazole, validamycin, valifenalate, valiphenal, vinclozolin, zineb, ziram, zoxamide, *Candida oleophila, Fusarium oxysporum, Gliocladium* spp., *Phlebiopsis gigantea, Streptomyces griseoviridis, Trichoderma* spp., (*RS*)-*N*-(3,5-dichlorophenyl)-2-(methoxymethyl)-succinimide, 1,2-dichloropropane, 1,3-dichloro-1,1,3,3-tetrafluoroacetone hydrate, 1-chloro-2,4-dinitronaphthalene, 1-chloro-2-nitropropane, 2-(2-heptadecyl-2-imidazolin-1-yl)ethanol, 2,3-dihydro-5-phenyl-1,4-dithi-ine 1,1,4,4-tetraoxide, 2-methoxyethylmercury acetate, 2-methoxyethylmercury chloride, 2-methoxyethylmercury silicate, 3-(4-chlorophenyl)-5-methylrhodanine, 4-(2-nitroprop-1-enyl)phenyl thiocyanateme, ampropylfos, anilazine, azithiram, barium polysulfide, Bayer 32394, benodanil, benquinox, bentaluron, benzamacril; benzamacril-isobutyl, benzamorf, binapacryl, bis(methylmercury) sulfate, bis(tributyltin) oxide, buthiobate, cadmium calcium copper zinc chromate sulfate, carbamoiph, CECA, chlobenthiazone, chloraniformethan, chlorfenazole, chlorquinox, climbazole, copper bis(3-phenylsalicylate), copper zinc chromate, cufraneb, cupric hydrazinium sulfate, cuprobam, cyclafuramid, cypendazole, cyprofuram, decafentin, dichlone, dichlozoline, diclobutrazol, dimethirimol, dinocton, dinosulfon, dinoterbon, dipyrithione, ditalimfos, dodicin, drazoxolon, EBP, ESBP, etaconazole, etem, ethirim, fenaminosulf, fenapanil, fenitropan, fluotrimazole, furcarbanil, furconazole, furconazole-cis, furmecyclox, furophanate, glyodine, griseofulvin, halacrinate, Hercules 3944, hexylthiofos, ICLA0858, isopamphos, isovaledione, mebenil, mecarbinzid, metazoxolon, methfuroxam, methylmercury dicyandiamide, metsulfovax, milneb, mucochloric anhydride, myclozolin, *N*-3,5-dichlorophenyl-succinimide, *N*-3-nitrophenylitaconimide, natamycin, *N*-ethylmercurio-4-toluenesulfonanilide, nickel bis(dimethyldithiocarbamate), OCH, phenylmercury dimethyldithiocarbamate, phenylmercury nitrate, phosdiphen, prothiocarb; prothiocarb hydrochloride, pyracarbolid, pyridinitril, pyroxychlor, pyroxyfur, quinacetol; quinacetol sulfate, quinazamid, quinconazole, rabenzazole, salicylanilide, SSF-109, sultropen, tecoram, thiadifluor, thicyofen, thiochlorfenphim, thiophanate, thioquinox, tioxymid, triamiphos, triarimol, triazbutil, trichlamide, urbacid, XRD-563, and zarilamid, IK-1140, and any combinations thereof.

Additionally, the compounds of the present invention may be combined with other pesticides, including insecticides, nematocides, miticides, arthropodicides, bactericides or combinations thereof that are compatible with the compounds of the present invention in the medium selected for application, and not antagonistic to the activity of the present compounds to form pesticidal mixtures and synergistic mixtures thereof. The fungicidal compounds of the present disclosure may be applied in conjunction with one or more other pesticides to control a wider variety of undesirable pests. When used in conjunction with other pesticides, the presently claimed compounds may be formulated with the other pesticide(s), tank mixed with the other pesticide(s) or applied sequentially with the other pesticide(s). Typical insecticides include, but are not limited to: *antibiotic insecticides* such as allosamidin and thuringiensin; *macrocyclic Lactone insecticides* such as spinosad and spinetoram; *avermectin insecticides* such as abamectin, doramectin, emamectin, eprinomectin, ivermectin and selamectin; *milbemycin insecticides* such as lepimectin, milbemectin, milbemycin oxime and moxidectin; *arsenical insecticides* such as calcium arsenate, copper acetoarsenite, copper arsenate, lead arsenate, potassium arsenite and sodium arsenite; *botanical insecticides* such as anabasine, azadirachtin, *d*-limonene, nicotine, pyrethrins, cinerins, cinerin I, cinerin II, jasmolin I, jasmolin II, pyrethrin I, pyrethrin II, quassia, rotenone, ryania and sabadilla; *carbamate insecticides* such as bendiocarb and carbaryl; *benzofuranyl methylcarbamate insecticides* such as benfuracarb, carbofuran, carbosulfan, decarbofuran and furathiocarb; *dimethylcarbamate insecticides* dimitan, dimetilan, hyquincarb and pirimicarb; *oxime carbamate insecticides* such as alanycarb, aldicarb, aldoxycarb, butocarboxim, butoxycarboxim, methomyl, nitrilacarb, oxamyl, tazimcarb, thiocarboxime, thiodicarb and thiofanox; *phenyl methylcarbamate insecticides* such as allyxycarb, aminocarb, bufencarb, butacarb, carbanolate, cloethocarb, dicresyl, dioxacarb, EMPC, ethiofencarb, fenethacarb, fenobucarb, isoprocarb, methiocarb, metolcarb, mexacarbate, promacyl, promecarb, propoxur, trimethacarb, XMC and xylylcarb; *dessicant insecticides* such as boric acid, diatomaceous earth and silica gel; *diamide insecticides* such as chlorantraniliprole, cyantraniliprole and flubendiamide; *dinitrophenol insecticides* such as dinex, dinoprop, dinosam and DNOC; *fluorine insecticides* such as barium hexafluorosilicate, cryolite, sodium fluoride, sodium hexafluorosilicate and sulfluramid; *formamidine insecticides* such as amitraz, chlordimeform, formetanate and formparanate; *fumigant insecticides* such as acrylonitrile, carbon disulfide, carbon tetrachloride, chloroform, chloropicrin, para-dichlorobenzene, 1,2-dichloropropane, ethyl formate, ethylene dibromide, ethylene dichloride, ethylene oxide, hydrogen cyanide, iodomethane, methyl bromide, methylchloroform, methylene chloride, naphthalene, phosphine, sulfuryl fluoride and tetrachloroethane; *inorganic insecticides* such as borax, calcium polysulfide, copper oleate, mercurous chloride, potassium thiocyanate and sodium thiocyanate; *chitin synthesis inhibitors* such as bistrifluron, buprofezin, chlorfluazuron, cyromazine, diflubenzuron, flucycloxuron, flufenoxuron, hexaflumuron, lufenuron, novaluron, noviflumuron, penfluron, teflubenzuron and triflumuron; *juvenile hormone mimics* such as epofenonane, fenoxycarb, hydroprene, kinoprene, methoprene, pyriproxyfen and triprene; *juvenile hormones* such as juvenile hormone I, juvenile hormone II and juvenile hormone III; *moulting hormone agonists* such as chromafenozide, halofenozide, methoxyfenozide and tebufenozide; *moulting **hormones*** such as α-ecdysone and ecdysterone; *moulting inhibitors* such as diofenolan; *precocenes* such as precocene I, precocene II and precocene III; *unclassified insect growth regulators* such as dicyclanil; *nereistoxin analogue insecticides* such as bensultap, cartap, thiocyclam and thiosultap; *nicotinoid insecticides* such as flonicamid; *nitroguanidine insecticides* such as clothianidin, dinotefuran, imidacloprid and thiamethoxam; *nitromethylene insecticides* such as nitenpyram and nithiazine; *pyridylmethyl-amine insecticides* such as acetamiprid, imidacloprid, nitenpyram and thiacloprid; *organochlorine insecticides* such as bromo-DDT, camphechlor, DDT, pp'-DDT, ethyl-DDD, HCH, gamma-HCH, lindane, methoxychlor, pentachlorophenol and TDE; *cyclodiene insecticides* such as aldrin, bromocyclen, chlorbicyclen, chlordane, chlordecone, dieldrin, dilor, endosulfan, alpha-endosulfan, endrin, HEOD, heptachlor, HHDN, isobenzan, isodrin, kelevan and mirex; *organophosphate insecticides* such as bromfenvinfos, chlorfenvinphos, crotoxyphos, dichlorvos, dicrotophos, dimethylvinphos, fospirate, heptenophos, methocrotophos, mevinphos, monocrotophos, naled, naftalofos, phosphamidon, propaphos, TEPP and tetrachlorvinphos; *organothiophosphate insecticides* such as dioxabenzofos, fosmethilan and phenthoate; *aliphatic organothiophosphate insecticides* such as acethion, amiton, cadusafos, chlorethoxyfos, chlormephos, demephion, demephion-O, demephion-S, demeton, demeton-O, demeton-S, demeton-methyl, demeton-O-methyl, demeton-S-methyl, demeton-S-methylsulphon, disulfoton, ethion, ethoprophos, IPSP, isothioate, malathion, methacrifos, oxydemeton-methyl, oxydeprofos, oxydisulfoton, phorate, sulfotep, terbufos and thiometon; *aliphatic amide organothiophosphate insecticides* such as amidithion, cyanthoate, dimethoate, ethoate-methyl, formothion, mecarbam, omethoate, prothoate, sophamide and vamidothion; *oxime organothiophosphate insecticides* such as chloiphoxim, phoxim and phoxim-methyl; *heterocyclic organothiophosphate insecticides* such as azamethiphos, coumaphos, coumithoate, dioxathion, endothion, menazon, morphothion, phosalone, pyraclofos, pyridaphenthion and quinothion; *benzothiopyran organothiophosphate insecticides* such as dithicrofos and thicrofos; *benzotriazine organothiophosphate insecticides* such as azinphos-ethyl and azinphos-methyl; *isoindole organothiophosphate insecticides* such as dialifos and phosmet; *isoxazole organothiophosphate insecticides* such as isoxathion and zolaprofos; *pyrazolopyrimidine organothiophosphate insecticides* such as chlorprazophos and pyrazophos; *pyridine organothiophosphate insecticides* such as chlorpyrifos and chlorpyrifos-methyl; *pyrimidine organothiophosphate insecticides* such as butathiofos, diazinon, etrimfos, lirimfos, pirimiphos-ethyl, pirimiphos-methyl, primidophos, pyrimitate and tebupirimfos; *quinoxaline organothiophosphate insecticides* such as quinalphos and quinalphos-methyl; *thiadiazole organothiophosphate insecticides* such as athidathion, lythidathion, methidathion and prothidathion; *triazole organothiophosphate insecticides* such as isazofos and triazophos; *phenyl organothiophosphate insecticides* such as azothoate, bromophos, bromophos-ethyl, carbophenothion, chlorthiophos, cyanophos, cythioate, dicapthon, dichlofenthion, etaphos, famphur, fenchlorphos, fenitrothion fensulfothion, fenthion, fenthion-ethyl, heterophos, jodfenphos, mesulfenfos, parathion, parathion-methyl, phenkapton, phosnichlor, profenofos, prothiofos, sulprofos, temephos, trichlormetaphos-3 and trifenofos; *phosphonate insecticides* such as butonate and trichlorfon; *phosphonothioate insecticides* such as mecarphon; *phenyl ethylphosphonothioate insecticides* such as fonofos and trichloronat; *phenyl phenylphosphonothioate insecticides* such as cyanofenphos, EPN and leptophos; *phosphoramidate insecticides* such as crufomate, fenamiphos, fosthietan, mephosfolan, phosfolan and pirimetaphos; *phosphoramidothioate insecticides* such as acephate, isocarbophos, isofenphos, isofenphos-methyl, methamidophos and propetamphos; *phosphorodiamide insecticides* such as dimefox, mazidox, mipafox and schradan; *oxadiazine insecticides* such as indoxacarb; *oxadiazoline insecticides* such as metoxadiazone; *phthalimide insecticides* such as dialifos, phosmet and tetramethrin; *pyrazole insecticides* such as tebufenpyrad, tolefenpyrad; *phenylpyrazole insecticides* such as acetoprole, ethiprole, fipronil, pyrafluprole, pyriprole and vaniliprole; *pyrethroid ester insecticides* such as acrinathrin, allethlin, bioallethrin, barthrin, bifenthrin, bioethanomethrin, cyclethrin, cycloprothrin, cyfluthrin, beta-cyfluthrin, cyhalothrin, gamma-cyhalothrin, lambda-cyhalothrin, cypermethrin, alpha-cypermethrin, beta-cypermethrin, theta-cypermethrin, zeta-cypermethrin, cyphenothrin, deltamethrin, dimefluthrin, dimethrin, empenthrin, fenfluthrin, fenpirithrin, fenpropathrin, fenvalerate, esfenvalerate, flucythrinate, fluvalinate, tau-fluvalinate, furethrin, imiprothrin, metofluthrin, permethrin, biopermethrin, transpermethrin, phenothrin, prallethrin, profluthrin, pyresmethrin, resmethrin, bioresmethrin, cismethrin, tefluthrin, terallethrin, tetramethrin, tralomethrin and transfluthrin; *pyrethroid ether insecticides* such as etofenprox, flufenprox, halfenprox, protrifenbute and silafluofen; *pyrimidinamine insecticides* such as flufenerim and pyrimidifen; *pyrrole insecticides* such as chlorfenapyr; *tetramic acid insecticides* such as spirotetramat; *tetronic acid insecticides* such as spiromesifen; *thiourea insecticides* such as diafenthiuron; *urea insecticides* such as flucofuron and sulcofuron; and *unclassified insecticides* such as closantel, copper naphthenate, crotamiton, EXD, fenazaflor, fenoxacrim, hydramethylnon, isoprothiolane, malonoben, metaflumizone, nifluridide, plifenate, pyridaben, pyridalyl, pyrifluquinazon, rafoxanide, sulfoxaflor, triarathene and triazamate, and any combinations thereof.

Additionally, the compounds of the present invention may be combined with herbicides that are compatible with the compounds of the present invention in the medium selected for application, and not antagonistic to the activity of the present compounds to form pesticidal mixtures and synergistic mixtures thereof. The fungicidal compounds of the present disclosure may be applied in conjunction with one or more herbicides to control a wide variety of undesirable plants. When used in conjunction with herbicides, the presently claimed compounds may be formulated with the herbicide(s), tank mixed with the herbicide(s) or applied sequentially with the herbicide(s). Typical herbicides include, but are not limited to: *amide herbicides* such as allidochlor, beflubutamid, benzadox, benzipram, bromobutide, cafenstrole, CDEA, cyprazole, dimethenamid, dimethenamid-P, diphenamid, epronaz, etnipromid, fentrazamide, flupoxam, fomesafen, halosafen, isocarbamid, isoxaben, napropamide, naptalam, pethoxamid, propyzamide, quinonamid and tebutam; *anilide herbicides* such as chloranocryl, cisanilide, clomeprop, cypromid, diflufenican, etobenzanid, fenasulam, flufenacet, flufenican, mefenacet, mefluidide, metamifop, monalide, naproanilide, pentanochlor, picolinafen and propanil; *arylalanine herbicides* such as benzoylprop, flamprop and flamprop-M; *chloroacetanilide herbicides* such as acetochlor, alachlor, butachlor, butenachlor, delachlor, diethatyl, dimethachlor, metazachlor, metolachlor, S-metolachlor, pretilachlor, propachlor, propisochlor, prynachlor, terbuchlor, thenylchlor and xylachlor; *sulfonanilide herbicides* such as benzofluor, perfluidone, pyrimisulfan and profluazol; *sulfonamide herbicides* such as asulam, carbasulam, fenasulam and oryzalin; *thioamide herbicides* such as chlorthiamid; *antibiotic herbicides* such as bilanafos; *benzoic acid herbicides* such as chloramben, dicamba, 2,3,6-TBA and tricamba; *pyrimidinyloxybenzoic acid herbicides* such as bispyribac and pyriminobac; *pyrimidinylthiobenzoic acid herbicides* such as pyrithiobac; *phthalic acid herbicides* such as chlorthal; *picolinic acid herbicides* such as aminopyralid, clopyralid and picloram; *quinolinecarboxylic acid herbicides* such as quinclorac and quinmerac; *arsenical herbicides* such as cacodylic acid, CMA, DSMA, hexaflurate, MAA, MAMA, MSMA, potassium arsenite and sodium arsenite; *benzoylcyclohexanedione herbicides* such as mesotrione, sulcotrione, tefuryltrione and tembotrione; *benzofuranyl alkylsulfonate herbicides* such as benfuresate and ethofumesate; *benzothiazole herbicides* such as benzazolin; *carbamate herbicides* such as asulam, carboxazole chlorprocarb, dichlormate, fenasulam, karbutilate and terbucarb; *carbanilate herbicides* such as barban, BCPC, carbasulam, carbetamide, CEPC, chlorbufam, chlorpropham, CPPC, desmedipham, phenisopham, phenmedipham, phenmedipham-ethyl, propham and swep; *cyclohexene oxime herbicides* such as alloxydim, butroxydim, clethodim, cloproxydim, cycloxydim, profoxydim, sethoxydim, tepraloxydim and tralkoxydim; *cyclopropylisoxazole herbicides* such as isoxachlortole and isoxaflutole; *dicarboximide herbicides* such as cinidon-ethyl, flumezin, flumiclorac, flumioxazin and flumipropyn; *dinitroaniline herbicides* such as benfluralin, butralin, dinitramine, ethalfluralin, fluchloralin, isopropalin, methalpropalin, nitralin, oryzalin, pendimethalin, prodiamine, profluralin and trifluralin; *dinitrophenol herbicides* such as dinofenate, dinoprop, dinosam, dinoseb, dinoterb, DNOC, etinofen and medinoterb; *diphenyl ether herbicides* such as ethoxyfen; *nitrophenyl ether herbicides* such as acifluorfen, aclonifen, bifenox, chlomethoxyfen, chlomitrofen, etnipromid, fluorodifen, fluoroglycofen, fluoronitrofen, fomesafen, furyloxyfen, halosafen, lactofen, nitrofen, nitrofluoren and oxyfluorfen; *dithiocarbamate herbicides* such as dazomet and metam; *halogenated aliphatic herbicides* such as alorac, chloropon, dalapon, flupropanate, hexachloroacetone, iodomethane, methyl bromide, monochloroacetic acid, SMA and TCA; *imidazolinone herbicides* such as imazamethabenz, imazamox, imazapic, imazapyr, imazaquin and imazethapyr; *inorganic herbicides* such as ammonium sulfamate, borax, calcium chlorate, copper sulfate, ferrous sulfate, potassium azide, potassium cyanate, sodium azide, sodium chlorate and sulfuric acid; *nitrile herbicides* such as bromobonil, bromoxynil, chloroxynil, dichlobenil, iodobonil, ioxynil and pyraclonil; *organophosphorus herbicides* such as amiprofos-methyl, anilofos, bensulide, bilanafos, butamifos, 2,4-DEP, DMPA, EBEP, fosamine, glufosinate, glufosinate-P, glyphosate and piperophos; *phenoxy herbicides* such as bromofenoxim, clomeprop, 2,4-DEB, 2,4-DEP, difenopenten, disul, erbon, etnipromid, fenteracol and trifopsime; *oxadiazoline herbicides* such as methazole, oxadiargyl, oxadiazon; *oxazole herbicides* such as fenoxasulfone; *phenoxyacetic herbicides* such as 4-CPA, 2,4-D, 3,4-DA, MCPA, MCPA-thioethyl and 2,4,5-T; *phenoxybutyric herbicides* such as 4-CPB, 2,4-DB, 3,4-DB, MCPB and 2,4,5-TB; *phenoxypropionic herbicides* such as cloprop, 4-CPP, dichloiprop, dichlorprop-P, 3,4-DP, fenoprop, mecoprop and mecoprop-P; *aryloxyphenoxypropionic herbicides* such as chlorazifop, clodinafop, clofop, cyhalofop, diclofop, fenoxaprop, fenoxaprop-P, fenthiaprop, fluazifop, fluazifop-P, haloxyfop, haloxyfop-P, isoxapyrifop, metamifop, propaquizafop, quizalofop, quizalofop-P and trifop; *phenylenediamine herbicides* such as dinitramine and prodiamine; *pyrazole herbicides* such as pyroxasulfone; *benzoylpyrazole herbicides* such as benzofenap, pyrasulfotole, pyrazolynate, pyrazoxyfen, and topramezone; *phenylpyrazole herbicides* such as fluazolate, nipyraclofen, pioxaden and pyraflufen; *pyridazine herbicides* such as credazine, pyridafol and pyridate; *pyridazinone herbicides* such as brompyrazon, chloridazon, dimidazon, flufenpyr, metflurazon, norflurazon, oxapyrazon and pydanon; *pyridine herbicides* such as aminopyralid, cliodinate, clopyralid, dithiopyr, fluroxypyr, haloxydine, picloram, picolinafen, pyriclor, thiazopyr and triclopyr; *pyrimidinediamine herbicides* such as iprymidam and tioclorim; *quaternary ammonium herbicides* such as cyperquat, diethamquat, difenzoquat, diquat, morfamquat and paraquat; *thiocarbamate herbicides* such as butylate, cycloate, di-allate, EPTC, esprocarb, ethiolate, isopolinate, methiobencarb, molinate, orbencarb, pebulate, prosulfocarb, pyributicarb, sulfallate, thiobencarb, tiocarbazil, tri-allate and vernolate; *thiocarbonate herbicides* such as dimexano, EXD and proxan; *thiourea herbicides* such as methiuron; *triazine herbicides* such as dipropetryn, indaziflam, triaziflam and trihydroxytriazine; *chlorotriazine herbicides* such as atrazine, chlorazine, cyanazine, cyprazine, eglinazine, ipazine, mesoprazine, procyazine, proglinazine, propazine, sebuthylazine, simazine, terbuthylazine and trietazine; *methoxytriazine herbicides* such as atraton, methometon, prometon, secbumeton, simeton and terbumeton; *methylthiotriazine herbicides* such as ametryn, aziprotryne, cyanatryn, desmetryn, dimethametryn, methoprotryne, prometryn, simetryn and terbutryn; *triazinone herbicides* such as ametridione, amibuzin, hexazinone, isomethiozin, metamitron and metribuzin; *triazole herbicides* such as amitrole, cafenstrole, epronaz and flupoxam; *triazolone herbicides* such as amicarbazone, bencarbazone, carfentrazone, flucarbazone, ipfencarbazone, propoxycarbazone, sulfentrazone and thiencarbazone-methyl; *triazolopyrimidine herbicides* such as cloransulam, diclosulam, florasulam, flumetsulam, metosulam, penoxsulam and pyroxsulam; *uracil herbicides* such as benzfendizone, bromacil, butafenacil, flupropacil, isocil, lenacil, saflufenacil and terbacil; *urea herbicides* such as benzthiazuron, cumyluron, cycluron, dichloralurea, diflufenzopyr, isonoruron, isouron, methabenzthiazuron, monisouron and noruron; *phenylurea herbicides* such as anisuron, buturon, chlorbromuron, chloreturon, chlorotoluron, chloroxuron, daimuron, difenoxuron, dimefuron, diuron, fenuron, fluometuron, fluothiuron, isoproturon, linuron, methiuron, methyldymron, metobenzuron, metobromuron, metoxuron, monolinuron, monuron, neburon, parafluron, phenobenzuron, siduron, tetrafluron and thidiazuron; *pyrimidinylsulfonylurea herbicides* such as amidosulfuron, azimsulfuron, bensulfuron, chlorimuron, cyclosulfamuron, ethoxysulfuron, flazasulfuron, flucetosulfuron, flupyrsulfuron, foramsulfuron, halosulfuron, imazosulfuron, mesosulfuron, metazosulfuron, nicosulfuron, orthosulfamuron, oxasulfuron, primisulfuron, propyrisulfuron, pyrazosulfuron, rimsulfuron, sulfometuron, sulfosulfuron and trifloxysulfuron; *triazinylsulfonylurea herbicides* such as chlorsulfuron, cinosulfuron, ethametsulfuron, iodosulfuron, metsulfuron, prosulfuron, thifensulfuron, triasulfuron, tribenuron, triflusulfuron and tritosulfuron; *thiadiazolylurea herbicides* such as buthiuron, ethidimuron, tebuthiuron, thiazafluron and thidiazuron; and *unclassified herbicides* such as acrolein, allyl alcohol, aminocyclopyrachlor, azafenidin, bentazone, benzobicyclon, bicyclopyrone, buthidazole, calcium cyanamide, cambendichlor, chlorfenac, chlorfenprop, chlorflurazole, chlorflurenol, cinmethylin, clomazone, CPMF, cresol, cyanamide, ortho-dichlorobenzene, dimepiperate, endothal, fluoromidine, fluridone, flurochloridone, flurtamone, fluthiacet, indanofan, methyl isothiocyanate, OCH, oxaziclomefone, pentachlorophenol, pentoxazone, phenylmercury acetate, prosulfalin, pyribenzoxim, pyriftalid, quinoclamine, rhodethanil, sulglycapin, thidiazimin, tridiphane, trimeturon, tripropindan and tritac.

One embodiment of the present disclosure is a method for the control or prevention of fungal attack. This method comprises applying to the soil, plant, roots, foliage, seed or locus of the fungus, or to a locus in which the infestation is to be prevented (for example applying to cereal or grape plants), a fungicidally effective amount of 5-fluorocytosine or a 5-fluorocytosine derivative. The compounds are suitable for treatment of various plants at fungicidal levels, while exhibiting low phytotoxicity. The compounds may be useful both in a protectant and/or an eradicant fashion.

The compounds have been found to have significant fungicidal effect particularly for agricultural use. Many of the compounds are particularly effective for use with agricultural crops and horticultural plants.

It will be understood by those in the art that the efficacy of the compound for the foregoing fungi establishes the general utility of the compounds as fungicides.

The compounds have broad ranges of efficacy as fungicides. The exact amount of the active material to be applied is dependent not only on the specific active material being applied, but also on the particular action desired, the fungal species to be controlled, and the stage of growth thereof, as well as the part of the plant or other product to be contacted with the compound. Thus, all the compounds, and formulations containing the same, may not be equally effective at similar concentrations or against the same fungal species.

The compounds are effective in use with plants in a disease-inhibiting and phytologically acceptable amount. The term "disease-inhibiting and phytologically acceptable amount" refers to an amount of a compound that kills or inhibits the plant disease for which control is desired, but is not significantly toxic to the plant. This amount will generally be from about 0.1 to about 1000 ppm (parts per million), with 1 to 500 ppm being preferred. The exact concentration of compound required varies with the fungal disease to be controlled, the type of formulation employed, the method of application, the particular plant species, climate conditions, and the like. A suitable application rate is typically in the range from about 0.10 to about 4 pounds/acre (about 0.01 to 0.45 grams per square meter, g/m²).

Any range or desired value given herein may be extended or altered without losing the effects sought, as is apparent to the skilled person for an understanding of the teachings herein.

### Zoological Testing

For the following examples, 5-fluorocytosine or a 5-fluorocytosine derivative was either dissolved in acetone or water, and dilutions were performed to obtain desirable rates. The spray solutions contained either 0.01% triton X-100 or 0.1% Trycol 5941. For high-volume spray, plants were sprayed to run-off using an automated booth sprayer. For a low-volume test, fungicide was applied using a track sprayer with application volume of 200 liters/hectare (L/H).

Plants were inoculated with fungal pathogens either 3 days before compound application (3-day curative test; 3DC) or 1 day after compound application (1-day protectant test; 1DP).

### Examples:

### 1. Evaluation of Fungicidal Activity: Leaf Blotch of Wheat Mycospharella graminicola; anamorph: Septoria tritici; Bayer code SEPTTR):

Wheat plants (variety Yuma) were grown from seed in a greenhouse in 50% mineral soil/50% soil-less Metro mix until the first leaf was fully emerged, with 7-10 seedlings per pot. These plants were inoculated with an aqueous spore suspension of *Septoria tritici* either prior to or after fungicide treatments. After inoculation the plants were kept in 100% relative humidity (one day in a dark dew chamber followed by two to three days in a lighted dew chamber) to permit spores to germinate and infect the leaf. The plants were then transferred to a greenhouse for disease to develop.

### 2. Evaluation of Fungicidal Activity: Glume Blotch of Wheat (Leptosphaeria nodorum; Bayer code LEPTNO; anamorph: Stagonospora nodorum):

Wheat plants (variety Yuma) were grown from seed in a greenhouse in 50% miniral soil/50% soil-less Metro mix until the first leaf was fully emerged, with 7-10 seedlings per pot. Wheat seedlings were inoculated with an aqueous spore suspension of *Leptosphaeria nodorum.* After inoculation the plants were kept in 100% relative humidity (one day in a dark dew chamber followed by three days in a lighted dew chamber) to permit spores to germinate and infect the leaf. The plants were then transferred to a greenhouse to allow disease to develop.

### 3. Evaluation of Fungicidal Activity: Spot Blotch of Barley (Cochliobolus sativum; Bay code COCHSA; anamorph: Hellninthosporiuln sativum):

Barley plants (variety Harrington) were grown from seeds in a greenhouse in soil-less Metro mix until the first leaf was fully emerged, with 7-10 seedlings per pot. Plants were inoculated with a spore suspension of *Helminthosporium sativum.* After inoculation barley seedlings were placed in a dark dew room with 100% relative humidity for a period of 24 hours, and then moved to a greenhouse for disease to develop.

### 4. Evaluation of Fungicidal Activity: Leaf Spot of Sugar Beets (Cercospora beticola; Bayer code CERCBE):

Sugar beets (variety HH-88) were grown in soil-less Metro mix in a greenhouse. The spores were harvested from moisturized infected leaf surface by washing whole leaves in water, and then filtered through two layers of cheesecloth. The young seedlings were inoculated with the spore suspension. The plants were kept in a dark dew room for 48 hours, and then placed under a plastic hood in a greenhouse with a temperature of 26 °C.

### 5. Evaluation of Fungicidal Activity: Leaf Spot of Peanut (Mycosphaerella arachidis; Bayer code MYCOAR; anamorph: Cercospora arachidicola):

Peanut seedlings (variety Star) were grown in soil-less Metro mix. The spores were harvested from moisturized infected leaf surface by washing whole leaves in water, and then filtered through two layers of cheesecloth. The young seedlings were inoculated with the spore suspension. The plants were kept in a dark dew room for 48 hours, and then placed under a plastic hood in a greenhouse with a temperature of 26°C.

### 6. Evaluation of Fungicidal Activity: Cucumber Anthracnose (Glomerella lagenarium; anamorph: Colletotrichum lagenarium; Bayer code COLLLA):

Cucumber seedlings (variety Bush Champion) were grown in soil-less Metro mix in a greenhouse. Cucumber plants were inoculated with a spore suspension and maintained in a dark dew room overnight. Plants were then moved to a growth chamber for disease development.

### 7. Evaluation of Fungicidal Activity: Apple Scab (Venturia inaequalis; Bayer code VENTIN):

Apple seedlings (McIntosh or Golden Delicious) were grown in Metro mix in a greenhouse. Fungal spores were collected from infected leaf tissue. Plants were inoculated with the spore suspension. Plants were placed in a dew room for 24 hours with 100% relative humidity and then transferred to a greenhouse with a temperature of 18°C for disease to develop.

### 8. Evaluation of fungicidal activity: Black Sigatoka Disease of Banana (Mycosphaerella fijiensis; BAYER code MYCOFI):

Efficacy against *Mycosphaerella fijiensis* was tested using newly emerged leaves of field grown banana plants. 20 mL of a diluted formulation of 5-fluorocytosine of the required concentration were sprayed onto each test leaf over a delineated area of 20 x 20 cm. The leaves were subsequently allowed to become infected by natural inoculum, and were visually assessed for percent disease control ~ 40 - 45 days later.

The following tables present the activity of 5-fluorocytosine (Table I) or a 5-fluorocytosine derivative (Table II) when evaluated in these experiments. The effectiveness of 5-fluorocytosine or 5-fluorocytosine derivative in controlling disease was determined by assessing the severity of disease on treated plants, then converting the severity to percent control based on the level of disease on untreated, inoculated plants.

In each case of Tables I and II the rating scale is as follows:

| % Disease Control | Rating |
|---|---|
| 76-100 | A |
| 51-75 | B |
| 26-50 | C |
| 0-25 | D |
| Not tested | E |

**Table I: Activity of 5-Fluorocytosine against Plant Diseases**

| Entry Number | Pathogen | Rate, ppm, 1DP | % Disease Control of 5-FC | Rate, ppm, 3DC | **%** Disease Control of 5-FC |
|---|---|---|---|---|---|
| 1 | COCHSA | 200 | C | 200 | E |
| 2 | COLLLA | 200 | A | 200 | E |
| 3 | SEPTTR | 200 | A | 100 | A |
| 4 | MYCOAR | 100 | A | 100 | A |
| 5 | CERCBE | 100 | A | 100 | E |
| 6 | LEPTNO | 100 | D | 100 | C |
| 7 | VENTIN | 75 | A | 75 | A |
| 8 | MYCOFI | 200 | B | 100 | B |

**Table II: One-Day Protectant (1DP) and Three-Day Curative (3DC) Activity of Compounds on SEPTTR at 100 ppm**

| **Cmpd** | **Structure** | **SEPTTR 100 PPM 1DP** | **SEPTTR 100 PPM 3DC** |
|---|---|---|---|
| 2 | 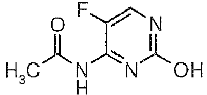 | A | A |
| 3 | 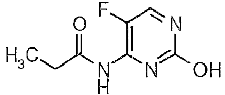 | A | A |
| 4 | 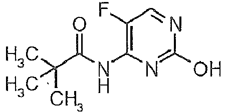 | A | A |
| 5 | 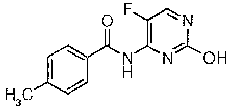 | A | B |
| 6 | 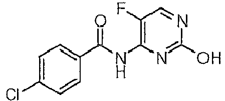 | A | C |
| 7 | 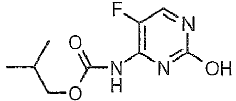 | B | B |
| 8 | 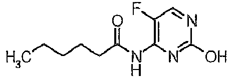 | A | A |
| 9 | 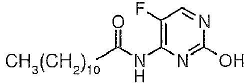 | A | C |
| 10 | 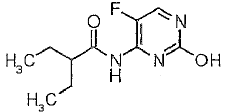 | C | D |
| 11 | 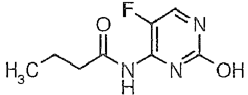 | A | A |
| 12 | 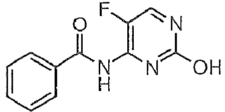 | A | A |
| 13 | 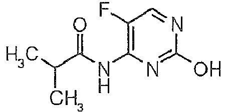 | A | A |
| 14 | 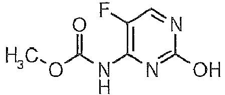 | C | D |
| 15 | 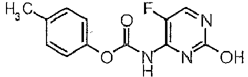 | A | B |
| 16 | 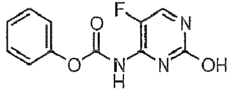 | A | A |
| 17 | 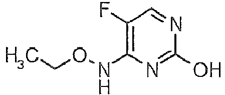 | C | A |
| 18 | 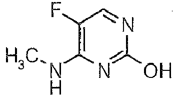 | D | B |
| 19 | 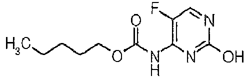 | D | D |
| 20 | 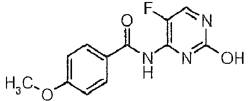 | D | D |
| 21 | 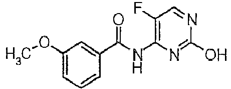 | D | D |
| 22 | 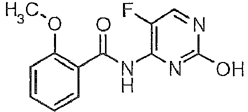 | D | D |
| 23 | 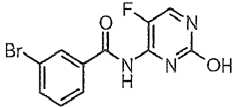 | C | D |
| 24 | 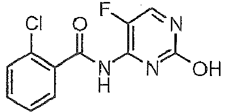 | C | C |

## Claims

1. A method of controlling a pathogen-induced disease in a plant that is at risk of being diseased from the pathogen comprising contacting one of the plant and an area adjacent to the plant with a composition selected from a 5-fluorocytosine derivative.

2. The method of claim 1, wherein the pathogen inducing the disease is a fungal pathogen.

3. The method of claim 1 wherein the composition further comprises an insecticide.

4. The method of claim 1 wherein the composition further comprises a weed control agent.

5. The method of claim 1 wherein the disease is one of apple scab, speckled leaf blotch of wheat, leaf spot of sugarbeets, leaf spot of peanut, cucumber anthracnose, and black sigatoka.

6. The method of claim 1 wherein the pathogen is one of *Venturia inaequalis, Septoria tritici, Cercospora beticola, Cercospora arachidicola, Colletotrichum lagenarium, and Mycosphaerella fijiensis.*
